Europäisches Patentamt
European Patent Office
Office européen des brevets

(19)

(11) Veröffentlichungsnummer: **0 429 997 A1**

(12) # EUROPÄISCHE PATENTANMELDUNG

(21) Anmeldenummer: **90121993.1**

(51) Int. Cl.5: **C09B 62/245**, D06P 1/382

(22) Anmeldetag: **17.11.90**

(30) Priorität: **30.11.89 DE 3939536**

(43) Veröffentlichungstag der Anmeldung:
**05.06.91 Patentblatt 91/23**

(84) Benannte Vertragsstaaten:
**CH DE FR GB LI Patentblatt**

(71) Anmelder: **BAYER AG**

**W-5090 Leverkusen 1 Bayerwerk(DE)**

(72) Erfinder: **Hoppe, Manfred, Dr.**
**Kölner Strasse 233**
**W-5067 Kürten(DE)**
Erfinder: **Henk, Hermann, Dr.**
**Roggendorfstrasse 55**
**W-5000 Köln 80(DE)**
Erfinder: **Herd, Karl-Josef, Dr.**
**Am Gartenfeld 66**
**W-5068 Odenthal(DE)**
Erfinder: **Stöhr, Frank-Michael, Dr.**
**Am Thelen Siefen 10**
**W-5068 Odenthal(DE)**
Erfinder: **Jäger, Horst, Dr.**
**Carl-Rumpff-Strasse 37**
**W-5090 Leverkusen 1(DE)**
Erfinder: **Schündehütte, Karl-Heinz, Prof. Dr.**
**Klief 75**
**W-5090 Leverkusen 3(DE)**

(54) **Reaktivfarbstoffe.**

(57) Azoreaktivfarbstoffe der Formel

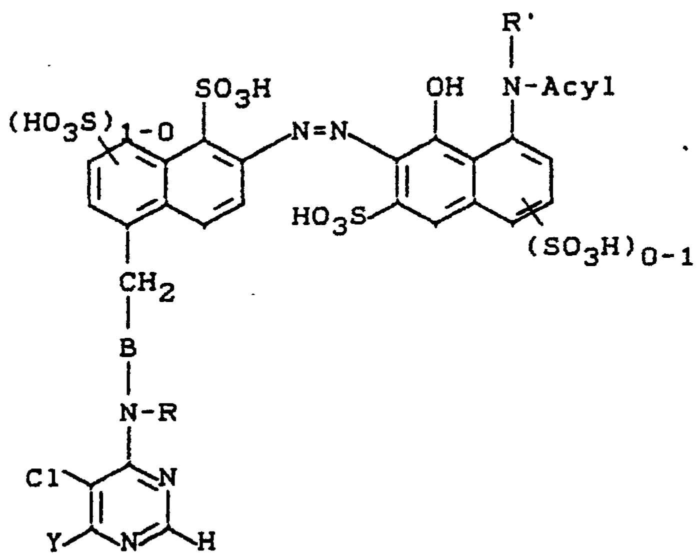

(I)

mit den in der Beschreibung angegebenen Substituentenbedeutungen eignen sich hervorragend zum Färben und Bedrucken von Hydroxylgruppen- und Amidgruppen-haltigen Materialien.

EP 0 429 997 A1

# REAKTIVFARBSTOFFE

Gegenstand der vorliegenden Erfindung sind neue Azoreaktivfarbstoffe der Formel

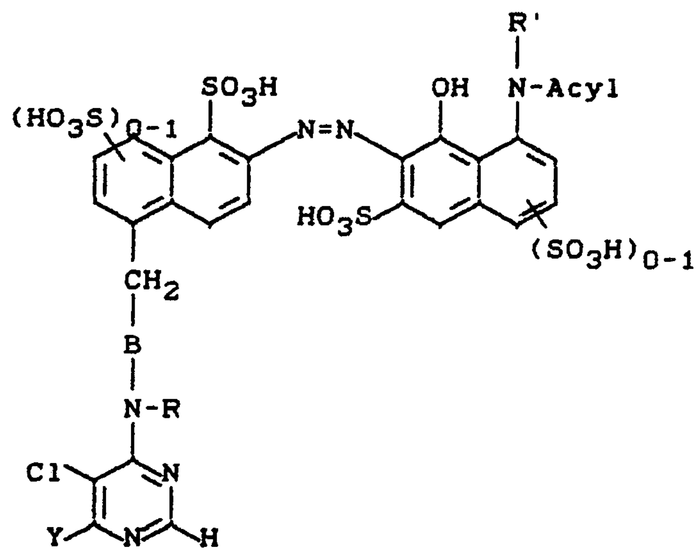

(I)

worin:

R,R' = H, gegebenenfalls substituiertes $C_1$-$C_6$-Alkyl (bevorzugte Substituenten: Halogen, OH, COOH, $SO_3H$, $OSO_3H$) ,

Y = alkalisch eliminierbarer Rest, z.B. F oder ein gegebenenfalls substituierter Pyridinium-Rest (Substituenten insbesondere gegebenenfalls substituiertes $C_1$-$C_4$-Alkyl, COOH, $SO_3H$, CN , Carbonamid),

B = eine direkte Bindung oder ein Brückenglied,

Acyl = Acylgruppe, vorzugsweise gegebenenfalls substituiertes Alkylcarbonyl, Akylsulfonyl, Arylcarbonyl, Arylsulfonyl oder Phenylureido, wobei Alkyl insbesondere gegebenenfalls substituiertes $C_1$-$C_4$-Alkyl mit den für R genannten Substituenten und Aryl bevorzugt für gegebenenfalls substituiertes Phenyl (bevorzugte Substituenten Cl, $C_1$-$C_4$-Alkyl, $C_1$-$C_4$-Alkoxy).

Geeignete Brückenglieder B sind beispielsweise

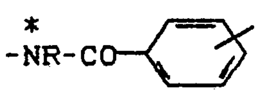 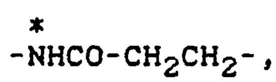 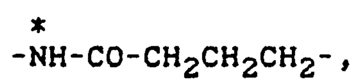

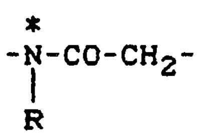 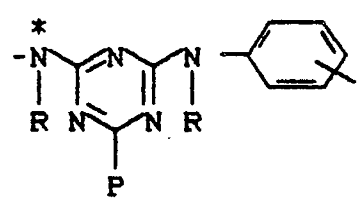

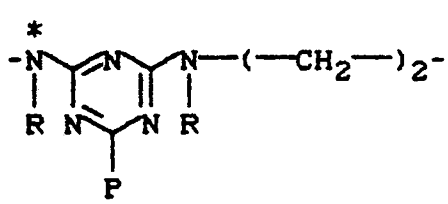

wobei: p = O-$R^1$, -$SR^1$ oder

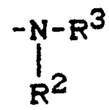

mit

$R^1$ = gegebenenfalls substituiertes $C_1$-$C_4$-Alkyl, gegebenenfalls substituierter aromatischcarbocyclischer oder aromatischer-heterocyclischer Rest

$R^2$ = H, aliphatischer oder cycloaliphatischer Rest,

$R^3$ = H, aliphatischer oder aromatisch-carbocyclischer Rest, $C_1$-$C_4$-Alkoxy, CN, $CSNH_2$oder gegebenenfalls substituiertes Amino oder $R_2$ und $R_3$ zusammen mit dem N-Atom einen gegebenenfalls weitere Heteroatome oder Hetaroatomgruppen, beispielsweise N und O enthaltenden Ring bilden können, vorzugsweise einen Morpholin-, Piperidin- oder Piperazin-Ring.

Der Stern markiert jeweils die Verknüpfungsstelle mit dem Farbstoffrest.

Die aliphatischen Reste sind bevorzugt $C_1$-$C_8$-Alkylreste die gegebenenfalls substituiert und durch Heteroatome wie O, S, N oder Heteroatomgruppen wie - CONH -unterbrochen sein können.

Als Substituenten für die Alkylgruppen kommen insbesondere OH, Cl, $SO_3H$, $OSO_3H$ oder $CO_2H$ in Frage.

Geeignete aromatisch-carbocylische Reste sind insbesondere gegebenenfalls substituierte Phenylreste (bevorzugte Substituenten: Cl, $C_1$-$C_4$-Alkyl, $C_1$-$C_4$-Alkoxy).

Bevorzugte Farbstoffe sind solche der Formel

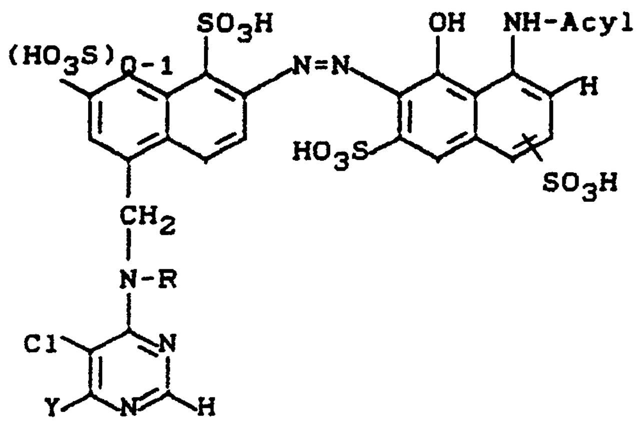

(II)

Besonders bevorzugt sind solche Farbstoffe der Formel

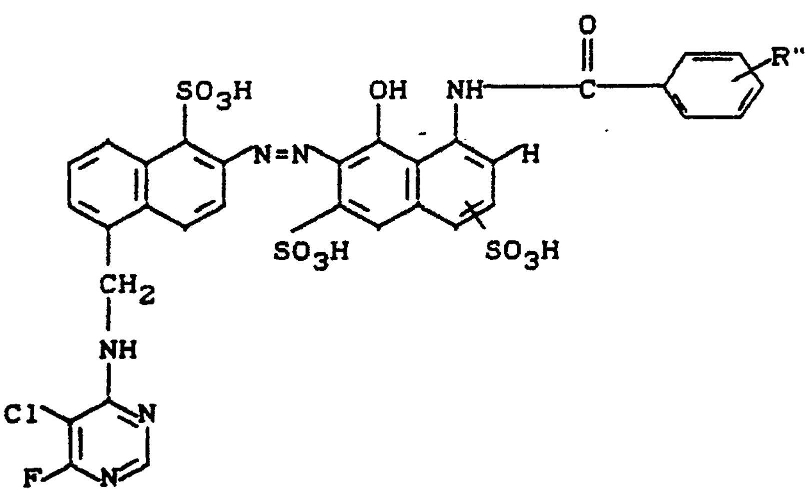

worin R" = H, Cl, $CH_3$, $OCH_3$, COOH oder OH ist.

Ganz besonders bevorzugt sind die Farbstoffe der Formeln

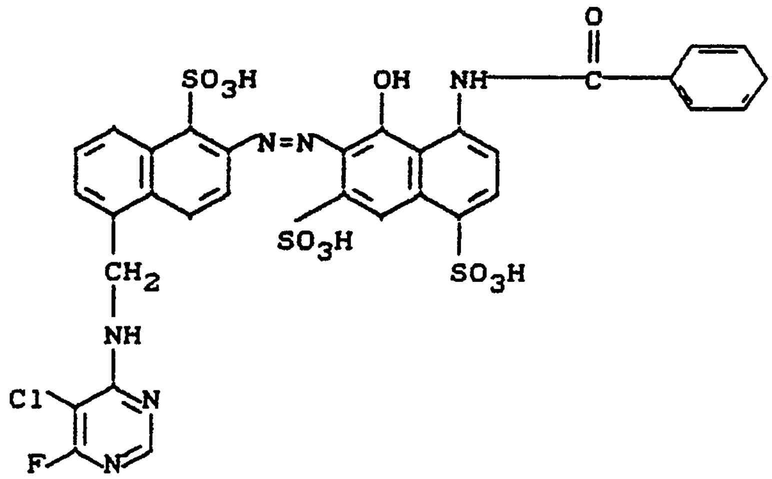

und

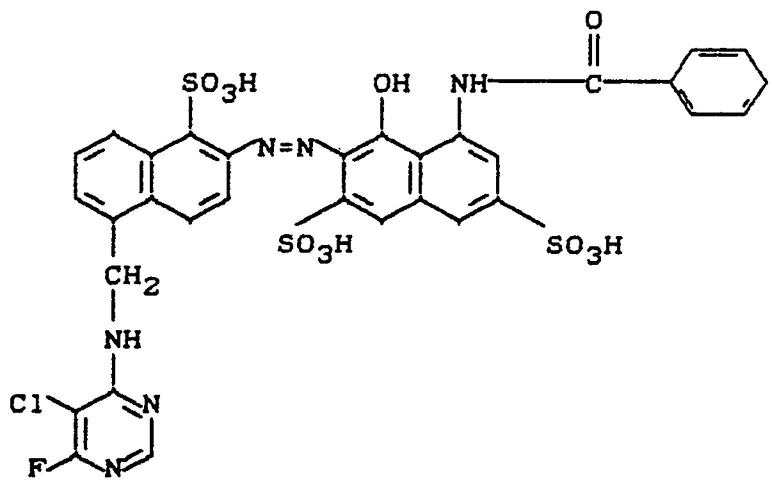

Die erfindungsgemäßen Farbstoffe können beispielsweise dadurch hergestellt werden, daß man in Farbstoffen der allgemeinen Formel

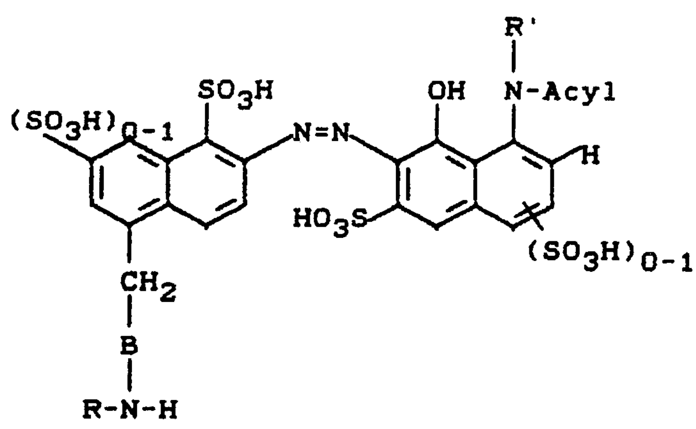

(II)

insbesondere solchen der Formel

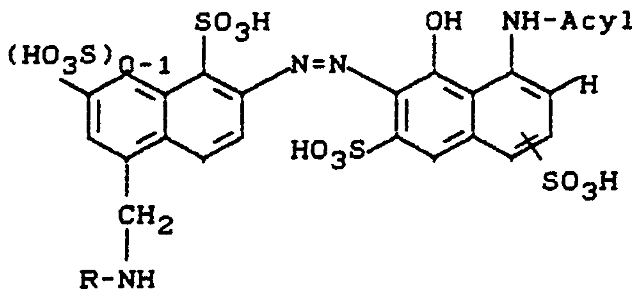

(IV)

worin

R, R' und B die oben angegebene Bedeutung haben, die Gruppierungen

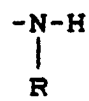

durch Kondensation mit einer Reaktivkomponente der allgemeinen Formel

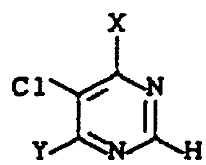

(V)

worin

Y die angegebene Bedeutung hat und

X einen alkalisch abspaltbaren Substituenten, bevorzugt F darstellt, in an sich bekannter Weise umsetzt, beispielsweise werden die Vorprodukte der Formel (III) bzw. (IV) in Wasser angerührt und mit 4,6-Difluor-5-chlor-pyrimidin bei O bis 40 °C umgesetzt. Die bei der Herstellung der neuen Farbstoffe (I) bzw. (II) entstehende Säure wird mit einer Lauge z.B. Natronlauge neutralisiert.

Nach einer Verfahrensvariante können die neuen Farbstoffe der allgemeinen Formel (I) bzw. (II) dadurch hergestellt werden, daß man Amine der Formel

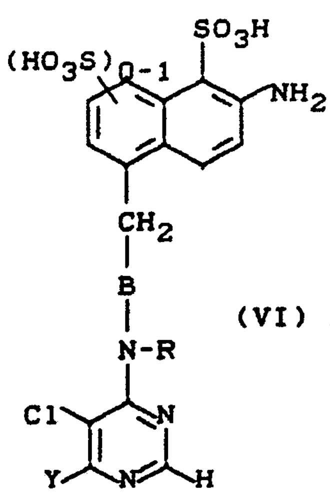

(VI) bzw.

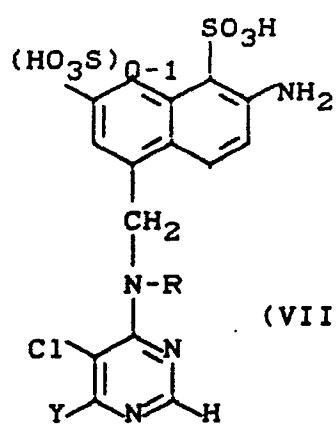

(VII)

worin

B, R und Y die oben angegebenen Bedeutungen haben, diazotiert und mit Komponenten der Formel

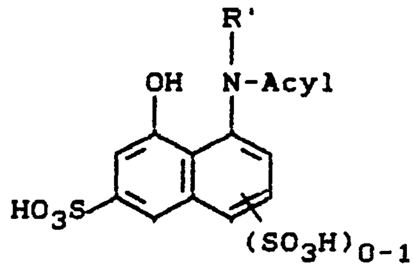

(VIII)

kuppelt,

wobei R' und Acyl die oben angegebenen Bedeutungen haben,

Die Kupplung erfolgt in an sich bekannter Weise in wäßrigem Medium bei pH-Werten von etwa 5 bis 7,

Die angegebenen Formeln sind die der freien Säuren, Bei der Herstellung werden im allgemeinen die Salze erhalten, insbesondere die Alkalisalze wie Natrium-, Kalium- oder Lithiumsalze, Die Farbstoffe können auch als konzentrierte Lösungen eingesetzt werden,

Die erfindungsgemäßen Farbstoffe eignen sich hervorragend zum Färben und Bedrucken von natürlichen und synthetischen OH-oder amidgruppenhaltigen Materialien, insbesondere solchen aus Cellulose und Polyamiden. Sie sind besonders geeignet zum Färben von Cellulosematerialien in Auszieh- und Klotz-Kaltverweilverfahren, sowie zum Bedrucken von Baumwolle und Zellwolle.

Man erhält bei gutem Aufbauvermögen und hohen Fixierausbeuten Färbungen mit guten Allgemeinechtheiten, insbesondere Naßechtheiten.

Beispiel 1

36,5 g 2-Amino-1-Sulfo-5-aminomethylnaphthalin werden in 300 ml Wasser, 240 g Eis und 40 ml konzentrierter Salzsäure angerührt und mit 33,5 Teilen 30 %iger Natriumnitritlösung diazotiert.

Diese Reaktionsmischung wird zu einer auf ca. 5° C gekühlten Lösung von 61 g 1-Hydroxy-8-benzoylamino-3,5-disulfonaphthalin in 500 ml Wasser gegeben. Während der Reaktion wird der pH mit Natronlauge auf ca. 6-7 gehalten. Nach beendeter Kupplung wird der Farbstoff mit 10 Vol-% Kochsalz ausgeschieden und abgesaugt. Der isolierte Farbstoff wird in 500 ml Wasser verrührt und mit 22 g 4,6-Difluor-5-chlorpyrimidin versetzt, wobei der pH mit Natronlauge bei ca. 7 gehalten wird, Der Farbstoff wird ausgesalzen, isoliert und getrocknet. Der so erhaltene Farbstoff dar Formel

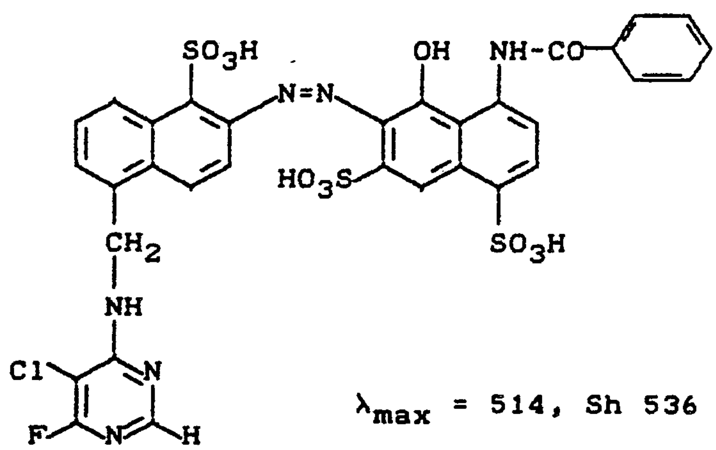

$\lambda_{max}$ = 514, Sh 536 nm ($H_2O$)

färbt Baumwolle in klaren roten Tönen.

Arbeitet man wie in Beispiel 1 angegeben, jedoch unter Verwendung der Diazokomponenten A bzw. B und der Kupplungskomponenten $K_1$-Acyl und $K_2$-Acyl wobei:

A = 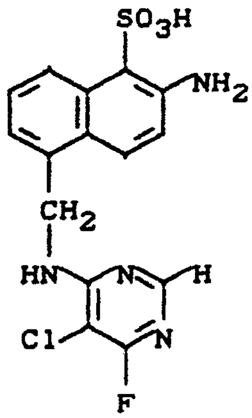 ; B = 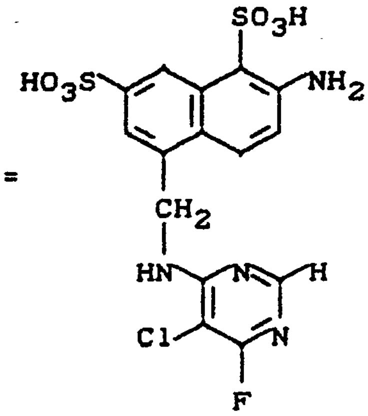

$K_1$ = 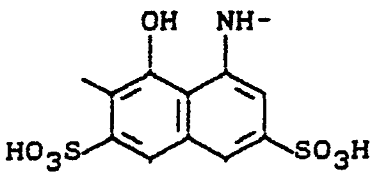 ; $K_2$ = 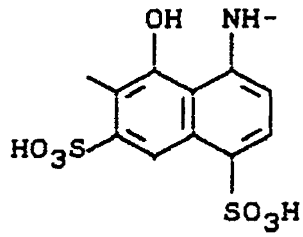

und Acyl die in Spalte 3 der folgenden Tabelle angegebene Bedeutung hat, erhält man Farbstoffe, die Baumwolle in den in Spalte 4 angegebenen Farbtönen färben.

T a b e l l e

| Bsp. | Diazokomponente | Kupplungskomponente | Acylreste | Farbton |
|---|---|---|---|---|
| 2 | A | $K_1$ | 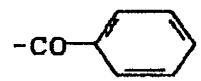 | blaust. Rot<br>$\lambda_{max}$ = 520, 544 nm ($H_2O$) |
| 3 | A | $K_1$ | 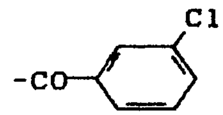 | blaust. Rot |
| 4 | A | $K_1$ | 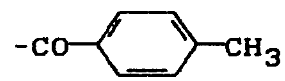 | blaust. Rot |
| 5 | A | $K_1$ | 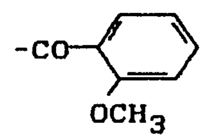 | blaust. Rot |
| 6 | A | $K_1$ | 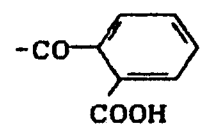 | blaust. Rot |
| 7 | A | $K_1$ | 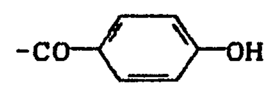 | blaust. Rot |

**<u>T a b e l l e</u>** (Fortsetzung)

| Bsp. | Diazokomponente | Kupplungskomponente | Acylreste | Farbton |
|---|---|---|---|---|
| 8 | A | $K_1$ | -CONH- 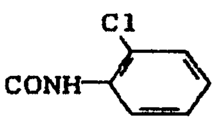 | blaust. Rot |
| 9 | A | $K_1$ | -CONH- 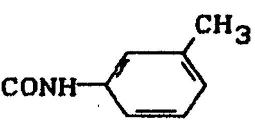 | blaust. Rot |
| 10 | A | $K_1$ | -CONH- 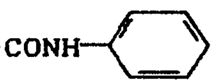 | blaust. Rot |
| 11 | A | $K_1$ | $-COCH_3$ | blaust. Rot |
| 12 | A | $K_1$ | -COCH=CH-COOH | blaust. Rot |
| 13 | A | $K_1$ | $-CO(CH_2)_2COOH$ | blaust. Rot |
| 14 | A | $K_1$ | $-COCH_2Cl$ | blaust. Rot |
| 15 | B | $K_1$ | -CO- 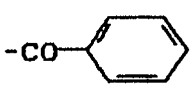 | blaust. Rot |
| 16 | B | $K_1$ | -CO- 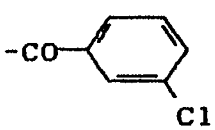 | blaust. Rot |

**T a b e l l e** (Fortsetzung)

| Bsp. | Diazokomponente | Kupplungskomponente | Acylreste | Farbton |
|---|---|---|---|---|
| 17 | B | $K_1$ | 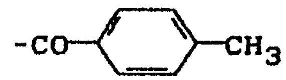 | blaust. Rot |
| 18 | B | $K_1$ | 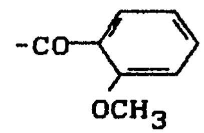 | blaust. Rot |
| 19 | B | $K_1$ | 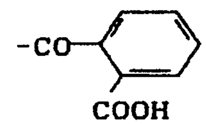 | blaust. Rot |
| 20 | B | $K_1$ | 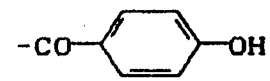 | blaust. Rot |
| 21 | B | $K_1$ | 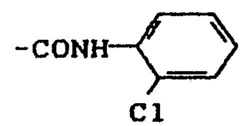 | blaust. Rot |
| 22 | B | $K_1$ | 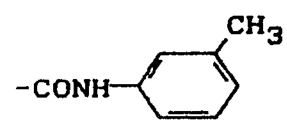 | blaust. Rot |

Tabelle (Fortsetzung)

| Bsp. | Diazokomponente | Kupplungskomponente | Acylreste | Farbton |
|---|---|---|---|---|
| 23 | B | $K_1$ | 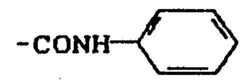 | blaust. Rot |
| 24 | B | $K_1$ | $-COCH_3$ | blaust. Rot |
| 25 | B | $K_1$ | $-COCH=CH-COOH$ | blaust. Rot |
| 26 | B | $K_1$ | $-CO(CH_2)_2COOH$ | blaust. Rot |
| 27 | B | $K_1$ | $-COCH_2Cl$ | blaust. Rot |
| 28 | A | $K_2$ | 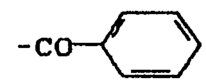 | Rot |
| 29 | A | $K_2$ | 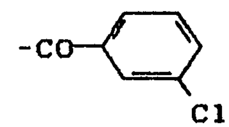 | Rot |
| 30 | A | $K_2$ | 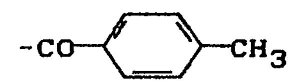 | Rot |
| 31 | A | $K_2$ | 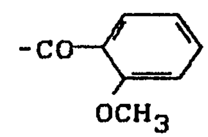 | Rot |

**T a b e l l e** (Fortsetzung)

| Bsp. | Diazokomponente | Kupplungskomponente | Acylreste | Farbton |
|---|---|---|---|---|
| 32 | A | $K_2$ | 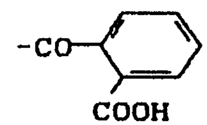 | Rot |
| 33 | A | $K_2$ | 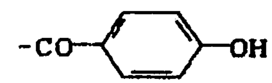 | Rot |
| 34 | A | $K_2$ | 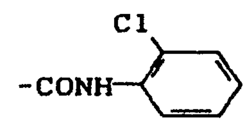 | Rot |
| 35 | A | $K_2$ | 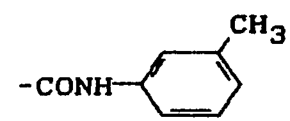 | Rot |
| 36 | A | $K_2$ | 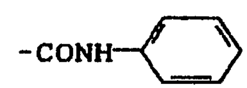 | Rot |
| 37 | A | $K_2$ | $-COCH_3$ | Rot |
| 38 | A | $K_2$ | $-COCH=CH-COOH$ | Rot |
| 39 | A | $K_2$ | $-CO(CH_2)_2COOH$ | Rot |

**Tabelle** (Fortsetzung)

| Bsp. | Diazokomponente | Kupplungskomponente | Acylreste | Farbton |
|---|---|---|---|---|
| 40 | A | $K_2$ | $-COCH_2Cl$ | Rot |
| 41 | B | $K_2$ | 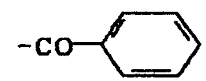 | Rot |
| 42 | B | $K_2$ | 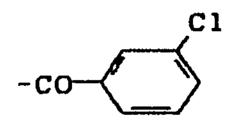 | Rot |
| 43 | B | $K_2$ | 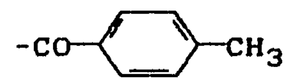 | Rot |
| 44 | B | $K_2$ | 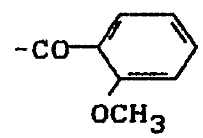 | Rot |
| 45 | B | $K_2$ | 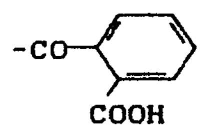 | Rot |
| 46 | B | $K_2$ | 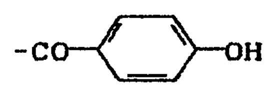 | Rot |

Tabelle (Fortsetzung)

| Bsp. | Diazokomponente | Kupplungskomponente | Acylreste | Farbton |
|---|---|---|---|---|
| 47 | B | $K_2$ | -CONH- 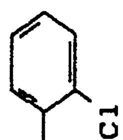 | Rot |
| 48 | B | $K_2$ | -CONH- 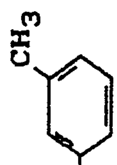 | Rot |
| 49 | B | $K_2$ | -CONH- 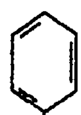 | Rot |
| 50 | B | $K_2$ | $-COCH_3$ | Rot |
| 51 | B | $K_2$ | $-COCH=CH-COOH$ | Rot |
| 52 | B | $K_2$ | $-CO(CH_2)_2COOH$ | Rot |
| 53 | B | $K_2$ | $-COCH_2Cl$ | Rot |

## Ansprüche

1. Azoreaktivfarbstoffe der Formel

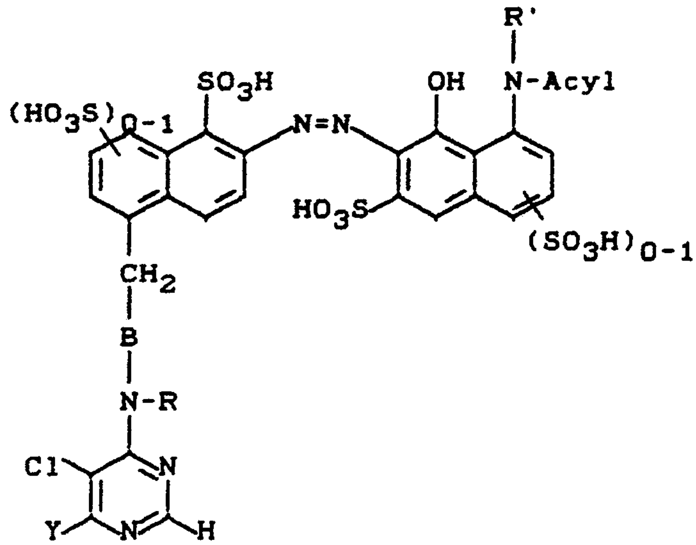

(I)

worin:

| | |
|---|---|
| R,R' = | H, gegebenenfalls substituiertes $C_1$-$C_6$-Alkyl (bevorzugte Substituenten: Halogen, OH, COOH, $SO_3H$, $OSO_3H$ ), |
| Y = | alkalisch eliminierbarer Rest, z.B. F oder ein gegebenenfalls substituierter Pyridinium-Rest (Substituenten insbesondere gegebenenfalls substituiertes $C_1$-$C_4$-Alkyl, COOH, $SO_3H$, CN , Carbonamid), |
| B = | eine direkte Bindung oder ein Brückenglied, |
| Acyl = | Acylgruppe, vorzugsweise gegebenenfalls substituiertes Alkylcarbonyl, Akylsulfonyl, Arylcarbonyl, Arylsulfonyl oder Phenylureido, wobei Alkyl insbesondere gegebenenfalls substituiertes $C_1$-$C_4$-Alkyl mit den für R genannten Substituenten und Aryl bevorzugt für gegebenenfalls substituiertes Phenyl (bevorzugte Substituenten Cl, $C_1$-$C_4$-Alkyl, $C_1$-$C_4$-Alkoxy). |

2. Farbstoffe des Anspruchs 1 der Formel

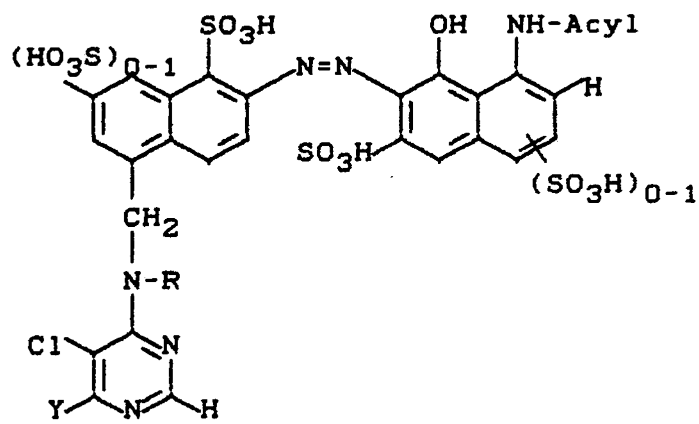

3. Farbstoffe des Anspruchs 1 der Formel

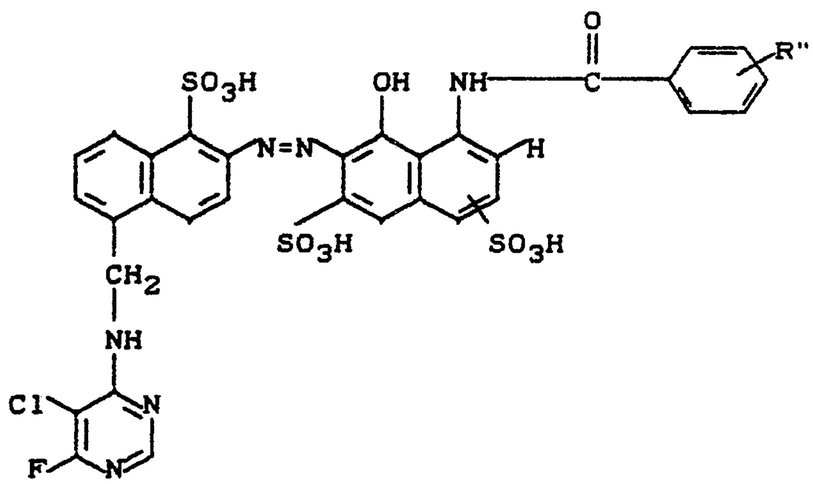

worin R" = H, Cl, $CH_3$, $OCH_3$, COOH oder OH ist.

4. Farbstoffe des Anspruchs 1 der Formel

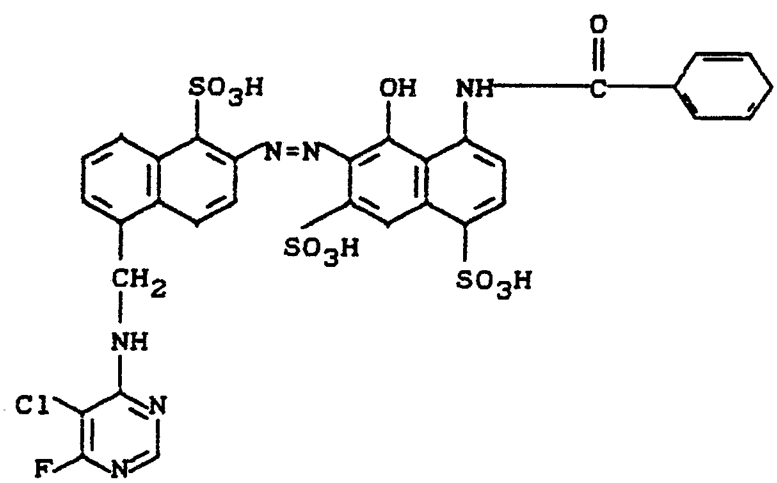

5. Farbstoffe des Anspruchs 1 der Formel

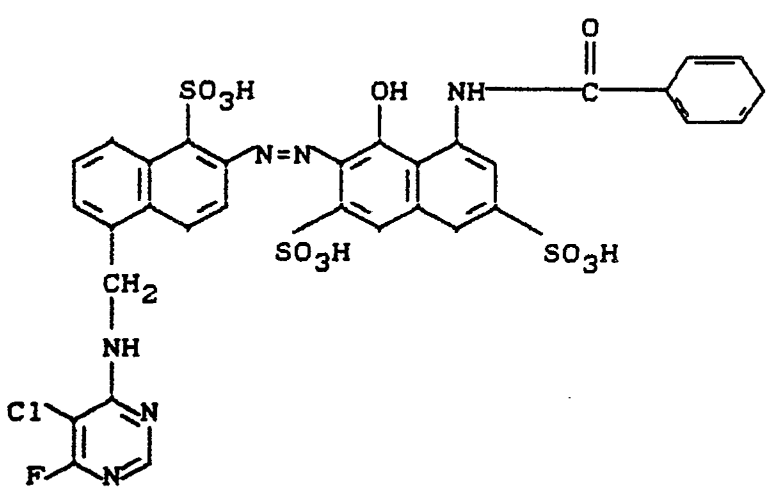

6. Verwendung der Farbstoffe der Ansprüche 1 und 2 zum Färben und Bedrucken Hydroxylgruppen- und Amidgruppen-haltiger Materialien.

7. Mit den Farbstoffen der Ansprüche 1 und 2 gefärbte oder bedruckte Hydroxylgruppen- oder Amidgruppenhaltige Materialien.

Europäisches Patentamt

# EUROPÄISCHER RECHERCHENBERICHT

Nummer der Anmeldung

EP 90 12 1993

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | EP-A-0 043 927 (BAYER)<br>* Ansprüche 1,3,7,8,9 *<br>– – – | 1-7 | C 09 B 62/245<br>D 06 P 1/382 |
| A | EP-A-0 016 931 (BAYER)<br>* Ansprüche 1,2,7; Beispiel 133 *<br>– – – – – | 1-7 | |
| | | | RECHERCHIERTE SACHGEBIETE (Int. Cl.5) |
| | | | C 09 B |

Der vorliegende Recherchenbericht wurde für alle Patentansprüche erstellt

| Recherchenort | Abschlußdatum der Recherche | Prüfer |
|---|---|---|
| Den Haag | 07 Dezember 90 | GINESTET M.E.J. |

KATEGORIE DER GENANNTEN DOKUMENTE

- X: von besonderer Bedeutung allein betrachtet
- Y: von besonderer Bedeutung in Verbindung mit einer anderen Veröffentlichung derselben Kategorie
- A: technologischer Hintergrund
- O: nichtschriftliche Offenbarung
- P: Zwischenliteratur
- T: der Erfindung zugrunde liegende Theorien oder Grundsätze
- E: älteres Patentdokument, das jedoch erst am oder nach dem Anmeldedatum veröffentlicht worden ist
- D: in der Anmeldung angeführtes Dokument
- L: aus anderen Gründen angeführtes Dokument
- &: Mitglied der gleichen Patentfamilie, übereinstimmendes Dokument